# EUROPEAN PATENT SPECIFICATION

(11) **EP 1 158 147 B1**
(45) Date of publication and mention of the grant of the patent: **17.12.2003**
(21) Application number: 01110508.7
(22) Date of filing: 27.04.2001
(51) Int. Cl.: F02D 19/06, F02D 19/02

(54) **Device and method of operating an internal combustion engine fed with a first or, alternatively, with a second type of fuel**
Vorrichtung und Verfahren zum wahlwiesen Betreiben einer Brennkraftmaschine mit einem ersten oder einem zweiten Brennstoff
Dispositif et procédé pour faire fonctionner un moteur à combustion interne à volonté avec un premier ou un second carburant

(30) Priority: 22.05.2000 IT MI001130
(43) Date of publication of application: 28.11.2001
(73) Proprietor: Landi Renzo S.p.A., 42025 Corte Tegge, Cavriago (Reggio Emilia) (IT)
(72) Inventor: Landi, Stefano, 42100 Reggio Emilia (IT); Corradini, Flavio, 42100 Reggio Emilia (IT)
(74) Representative: Ripamonti, Enrico, Dr. Ing.

(56) References cited:
- EP-A- 0 922 843
- JP-A- 61 081 573
- US-A- 4 576 137
- US-A- 5 735 253
- US-A- 6 003 478

## Description

The present invention relates to a device to enable correct operation of an internal combustion engine fed with a primary fuel such as petrol or, alternatively, with a secondary fuel such as gas, in accordance with the introduction to the main claim.

The invention also relates to a method to enable the aforestated operation.

On vehicles of new production, in particular motor vehicles, there is known to be present an electronic control system aimed at optimum engine operation (OBD or on board diagnostic system) with the object of limiting the emission of pollutants into the environment. This electronic control system comprises a control unit connected to sensor means arranged for example to determine the composition of the exhaust gases, to determine the manner in which the fuel is fed to the engine, and to determine the subsequent use of this fuel within the cylinders of said engine. This control unit is also connected to displays, defined by a plurality of warning lights, present in the vehicle driving compartment and in particular on its dashboard. The unit is also connected to memory means arranged to record any engine malfunction conditions.

Means are likewise known to enable internal combustion engines of vehicles to operate with gas (or other secondary fuel). This gas is contained in a suitable tank positioned on the vehicle in addition to that for the petrol (or other primary fuel), usual changeover and gas feed means being provided to enable the gas to flow through the fuel feed conduit when gas operation is required, as an alternative to petrol.

This gas feeding of engines mounted on vehicles of new production can cause various problems deriving the sensing of engine operating conditions different from those which have been preset on the control means for the use of petrol as the fuel. For example, compared with petrol operation, gas operation results in alteration in the composition of exhaust gases (and an alteration in pollutant emissions), alteration in the combustion parameters within the cylinders, and in the fuel feed parameters. As a result, the unit controlling the engine operation records these alterations as engine malfunction conditions and displays them on the dashboard by activating one or more warning lights related to parameters considered to be not lying within acceptable values.

All this has led to considerable difficulties in feeding said engines with gas.

An object of the present invention is therefore to provide a device enabling engines electronically controlled by OBD systems to be fed with gas while allowing effective control of the engine.

A further object is to provide a device of the stated type which prevents the recording and display of data concerning operating conditions not lying within predetermined parameters as a result of feeding gas (or other secondary fuel) to the engine, this feed then enabling optimum use of the vehicle both from the mechanical and from the pollutant emission viewpoints.

These and further objects which will be apparent to the expert of the art are attained by a device in accordance with the accompanying claims.

The invention derives from the fact that in engines of new production provided with electronic control using the OBD system, engine operation diagnosis is automatically deactivated when the control unit senses (by means of a suitable sensor) that the petrol (or other primary fuel) level in the relative tank is less than a predetermined value (i.e. a primary fuel deficiency condition). This is to prevent a possible complete depletion of said fuel leading to the determination of unacceptable error values of all the controlled quantities: for example an error (i.e. unacceptable) value is sensed by each exhaust gas composition sensor (lambda probes), lack of combustion is detected, wrong fuel feed is detected, etc.

To prevent such determination, the control unit is caused to deactivate each display and recording means for each malfunction when the primary fuel quantity present in the tank is less than a value indicating a deficiency of said fuel (for example equal to 20% of the tank capacity).

Taking this situation as its starting point, and in a manner analogous to the aforegoing, the present invention enables gas (or other secondary fuel) to be fed to the engine by inhibiting the display and recording of (presumed) engine malfunctions by the control unit, these malfunctions being related to the different measured pollutant gas emission values, the different ignition parameters, etc. which arise because of the use of gas as the fuel.

The present invention will be more apparent from the accompanying drawing, which is provided by way of non-limiting example and in which:
Figure 1 shows a block diagram of a part of the diagnosis circuit in which the device of the invention is positioned;
Figure 2 is a schematic view of a portion of the device of Figure 1;
Figure 3 shows a flow diagram indicating the manner of operation of the device of the invention;
Figure 4 is a graph showing an electrical signal reaching an engine control unit as a function of the different type of fuel (petrol or gas) which feeds it.

With reference to said figures, a circuit for controlling the correct operation of an internal combustion engine of a vehicle operating either by petrol (or other primary fuel) feed or, alternatively, by gas (or other secondary fuel) feed comprises for said engine a control unit 1 cooperating with a plurality of sensors (not shown) for verifying the exhaust gas composition, the combustion characteristics in each cylinder, and other known parameters. This unit forms part of a known engine diagnostic system of OBD type and is connected to one or more displays or warning lights 2 positioned in the vehicle driver compartment, for example on a usual dashboard.

The unit 1 is connected to a member (not shown) for recording or memorizing possible engine malfunctions sensed by the aforesaid sensors. This member is preferably and usually a part of the unit 1.

This unit is also connected to a level sensor 3 positioned inside the petrol tank. By means of the control signal the unit 1 determines the quantity of primary fuel present in the relative tank. If this quantity is less than a predetermined value, for example 20% of the tank capacity, the unit 1 deactivates every intervention on the warning lights and on the memory member.

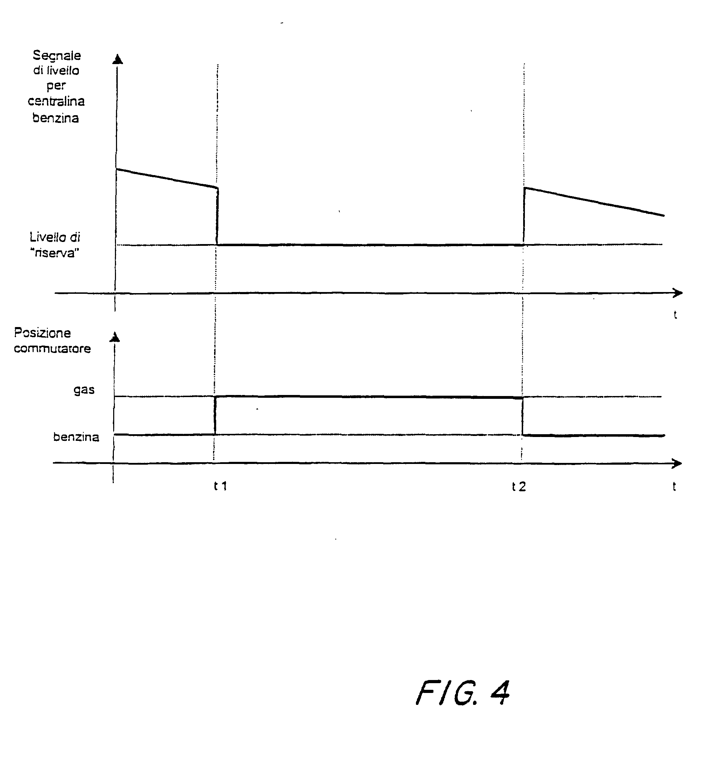

As stated, the engine controlled by the unit 1 can be fed with gas (or other secondary fuel). To also enable optimum engine operation when this feed is present, the device of the invention is associated with the unit 1. This device comprises an entry line 10 connected to the level sensor 3 and terminating at one end 10A with which there cooperates a switch 11 controlled by a known changeover member 12 for engine gas operation connected to a gas tank (not shown) and to a conduit for feeding the fuel to the engine. This switch is connected permanently to an exit line 13 connected to the unit 1 and can be connected either to the end 10A or to one end 14A of a line 14 connected to a member 15 generating an electrical signal V of magnitude equal to the signal M generated by the level sensor 3 when the petrol level in the usual tank does not exceed a predetermined level (see Figure 4). Preferably, the switch is controlled by a control element 16 connected to the changeover member 12 for gas operation. The member 15 is connected to the usual vehicle electrical circuit and is activated by closing the switch 11 onto the end 14A of the line 14.

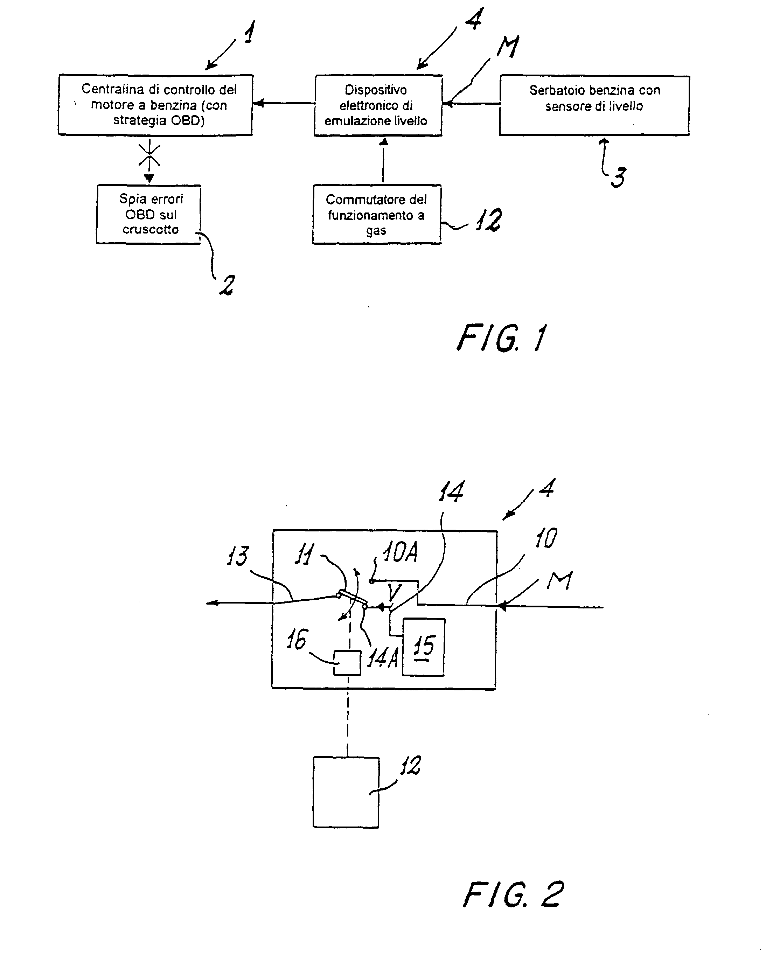

By means of the device 4, the operation of which is described hereinafter, gas (or other secondary fuel) feed can be used on a petrol (or other primary fuel) vehicle without the OBD system or rather the unit 1 (petrol engine control centre using OBD strategy, as indicated in Figure 1) acts on the warning lights 2 (to activate them) or on the memory member, having sensed engine operating conditions different from those which were preset. These different conditions derive from the fact that the reference values (for example the exhaust gas composition) are set for petrol feed to the engine, these values changing for gas feed, as is well known.

More specifically, it will be assumed that the engine is fed with petrol and that the quantity of this latter in the tank is greater than a predetermined minimum value (for example equal to 20% of the tank capacity). Under these conditions the switch 11 is connected to the end 10A of the line 10, this being connected to the line 13. The level sensor 3 is hence connected to the unit 1.

It will now be assumed that gas feed is to be used. To achieve this, the changeover member 12 is operated at time t1 (Figure 4) in order, in known manner and therefore not described, to enable the type of fuel to be changed. At the same time, the changeover member 12, for example by means of an electrical signal activated by a switch (not shown), activates the element 16 which moves the switch 11 from the line 10 to the end 14A of the line 14 and simultaneously activates the generator member 15 so that it generates the signal V having an electrical level (a resistive or voltage signal) equal to that of the signal M generated by the sensor 3 when the petrol level is equal to a predetermined value (see Figure 4).

As a result of this signal, the unit 1 in known manner deactivates every connection to the warning lights 2 and to the memory member connected to it. The engine can therefore be fed with gas without the OBD system detecting engine malfunctions following the fuel change.

If petrol feed is restored at time t2 (see Figure 4), the signal V ceases because the switch 11 is returned to its connection with the line 10 by the element 16 in the same manner similar as already described.

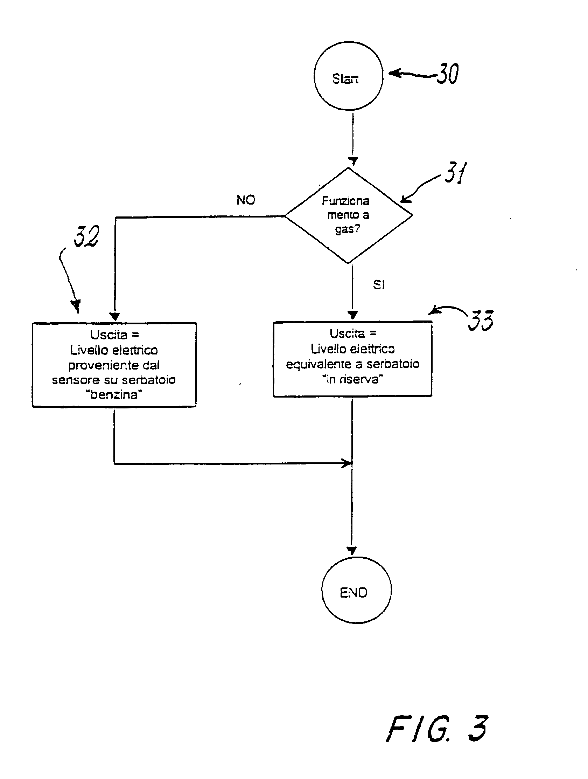

Consequently, the device 4 operates in the manner shown in Figure 3. In other words, periodically (block 30 Figure 3) the device 4 evaluates if gas operation is in progress (block 31). If the reply is negative, an output signal M may be emitted by the device 4 (block 32); if the reply is positive, the device emits the output signal V (block 33) in the aforedescribed manner.

An embodiment of the invention has been described in which the disenabling of the unit 1 following changeover of the feed from petrol to gas takes place by the generation of a "false signal" corresponding to the unit disenabling signal generated by a slider measuring the petrol level in the respective tank when the quantity of this petrol is less than a predetermined value. This false signal can correspond to any electrical signal which, in accordance with precise rules, would, when received by the unit 1, inhibit its intervention on the warning lights 2 and on the memory member (such as for example the deactivation signal generated in those cases in which a power socket present on the vehicle is used, or in the case in which the ambient temperature, or the atmospheric pressure representing the altitude, is less than a predetermined value).

## Claims

1. A device to enable correct operation of a vehicle internal combustion engine fed with a primary fuel such as petrol and, alternatively, with a secondary fuel such as gas, and controlled electronically by an OBD system via a control unit (1), said unit (1) being connected to means (3) for determining the primary fuel quantity present in a tank and to means for sensing optimum combustion conditions within said engine, the unit being also connected to display means (2) positioned in the vehicle driver compartment and arranged to indicate when operating conditions of said engine are not optimum, and to memory means for recording these conditions, the engine being able to be connected by means of a changeover member (12) to a secondary fuel tank connected to the engine fuel feed conduit, said device being **characterised by** comprising means (15) for generating an electrical signal (V) which disenables the connection between the control unit (1) and the display means (2) and memory means, said generating means (15) being controlled by the changeover member (12) which enables the means (15) to feed the disenabling signal (V) to the control unit (1) at that moment in which changeover of the feed from the primary fuel to the secondary fuel takes place.

2. A device as claimed in claim 1, **characterised in that** the disenabling electrical signal (V) has an electrical level equal to that of a disenabling electrical signal (M) present in the OBD system.

3. A device as claimed in claim 2, **characterised in that** the disenabling electrical signal (V) has the electrical level of the signal (M) generated by a level sensor (3) for the primary fuel in the relative tank when this level is less than a predetermined level.

4. A device as claimed in claim 2, **characterised in that** the disenabling electrical signal (V) has the electrical level of a signal corresponding to that when using a power socket provided on the vehicle.

5. A device as claimed in claim 2, **characterised in that** the disenabling electrical signal (V) has the electrical level of a signal corresponding to that when using the engine at a temperature or at a pressure less than a predetermined value.

6. A device as claimed in claim 2, **characterised in that** the means (15) for generating the disenabling electrical signal (V) are connected to the control unit (1) in a manner interruptable by a switch (11) arranged to connect said unit (1) to said means (15) or, alternatively, to an electrical line (10) connected to a controlled member or to vehicle users.

7. A device as claimed in claim 6, **characterised in that** the switch (11) is arranged to connect the generator means (15) or, alternatively, the level sensor (3) for the primary fuel in the relative tank.

8. A method to enable correct operation of a vehicle internal combustion engine fed with a primary fuel such as petrol and, alternatively, with a secondary fuel such as gas, and controlled electronically by an OBD system via a control unit (1), said unit (1) being connected to means (3) for determining the primary fuel quantity present in a tank and to means for sensing optimum combustion conditions within said engine, the unit being also connected to display means (2) positioned in the vehicle driver compartment and arranged to indicate when operating conditions of said engine are not optimum, and to memory means for recording these conditions, the engine being able to be connected by means of a changeover member (12) to a secondary fuel tank connected to the engine fuel feed conduit, said method being **characterised by** comprising, as a consequence of the action on said changeover member (12), the generation in the OBD system of an electrical signal (V) arranged to disenable the action of the control unit on the display means (2) and on the memory means.

9. A method as claimed in claim 8, **characterised in that** the disenabling electrical signal (V) has an electrical level equal to that of an electrical signal (M) generated in said system as a result of a primary fuel condition lower than a predetermined value.

10. A method as claimed in claim 8, **characterised in that** the disenabling electrical signal has an electrical level equal to that of an electrical signal generated at the moment of use of a power socket provided on the vehicle.

11. A method as claimed in claim 8, **characterised in that** the disenabling electrical signal has an electrical level equal to that of an electrical signal generated on using the engine at an ambient temperature or pressure less than a predetermined value.

## Patentansprüche

1. Vorrichtung zum Ermöglichen eines korrekten Betriebes eines Fahrzeug-Verbrennungsmotors, der mit einem Primärtreibstoff wie etwa Benzin und alternativ mit einem Sekundärtreibstoff wie etwa Gas versorgt wird und elektronisch durch ein OBD-System über eine Steuereinheit (1) gesteuert wird, wobei die Einheit (1) mit Mitteln (3) zum Bestimmen der in einem Tank vorhandenen Primärtreibstoffmenge und mit Mitteln zum Erfassen optimaler Verbrennungszustände in dem Motor verbunden ist und wobei die Einheit auch mit Anzeigemitteln (2), die sich in dem Fahrzeug-Fahrerraum befinden und angeordnet sind, um anzuzeigen, wenn Betriebszustände des Motors nicht optimal sind, und mit Speichermitteln zum Aufzeichnen dieser Zustände verbunden ist, wobei der Motor mittels eines Umschaltteils (12) mit einem Sekundärtreibstofftank verbunden werden kann, der mit der Motor-Treibstoffzufuhrleitung verbunden ist, wobei die Vorrichtung **dadurch gekennzeichnet ist, daß** sie Mittel (15) zum Erzeugen eines elektrischen Signals (V) aufweist, das die Verbindung zwischen der Steuereinheit (1) und den Anzeigemitteln (2) und den Speichermitteln deaktiviert, wobei die Erzeugungsmittel (15) durch das Umschaltteil (12) gesteuert werden, welches es den Mitteln (15) ermöglicht, das Deaktivierungssignal (V) der Steuereinheit (1) in dem Moment zuzuführen, in dem eine Umschaltung der Zufuhr von dem Primärtreibstoff auf den Sekundärtreibstoff stattfindet.

2. Vorrichtung nach Anspruch 1, **dadurch gekennzeichnet, daß** das deaktivierende elektrische Signal (V) einen elektrischen Pegel hat, der gleich demjenigen eines deaktivierenden elektrischen Signals (M) ist, das in dem OBD-System vorhanden ist.

3. Vorrichtung nach Anspruch 2, **dadurch gekennzeichnet, daß** das deaktivierende elektrische Signal (V) den elektrischen Pegel des Signals (M) hat, das durch einen Füllstandsensor (3) für den Primärtreibstoff in dem entsprechenden Tank erzeugt wird, wenn dieser Füllstand geringer als ein vorbestimmter Füllstand ist.

4. Vorrichtung nach Anspruch 2, **dadurch gekennzeichnet, daß** das deaktivierende elektrische Signal (V) den elektrischen Pegel eines Signals hat, das dem entspricht, wenn eine Steckdose verwendet wird, die an dem Fahrzeug vorgesehen ist.

5. Vorrichtung nach Anspruch 2, **dadurch gekennzeichnet, daß** das deaktivierende elektrische Signal (V) den elektrischen Pegel eines Signals hat, das dem entspricht, wenn der Motor bei einer Temperatur oder bei einem Druck verwendet wird, die bzw. der niedriger als ein vorbestimmter Wert ist.

6. Vorrichtung nach Anspruch 2, **dadurch gekennzeichnet, daß** die Mittel (15) zum Erzeugen des deaktivierenden elektrischen Signals (V) mit der Steuereinheit (1) in einer durch einen Schalter (11) unterbrechbaren Weise verbunden sind, der angeordnet ist, um die Einheit (1) mit den Mitteln (15) oder alternativ mit einer elektrischen Leitung (10) zu verbinden, die mit einem gesteuerten Teil oder Fahrzeugbenutzern verbunden ist.

7. Vorrichtung nach Anspruch 6, **dadurch gekennzeichnet, daß** der Schalter (11) angeordnet ist, um die Erzeugermittel (15) oder alternativ den Füllstandsensor (3) für den Primärtreibstoff in dem entsprechenden Tank zu verbinden.

8. Verfahren zum Ermöglichen eines korrekten Betriebes eines Fahrzeug-Verbrennungsmotors, der mit einem Primärtreibstoff wie etwa Benzin und alternativ mit einem Sekundärtreibstoff wie etwa Gas versorgt wird und elektronisch durch ein OBD-System über eine Steuereinheit (1) gesteuert wird, wobei die Einheit (1) mit Mitteln (3) zum Bestimmen der in einem Tank vorhandenen Primärtreibstoffmenge und mit Mitteln zum Erfassen optimaler Verbrennungszustände in dem Motor verbunden ist und wobei die Einheit auch mit Anzeigemitteln (2), die sich in dem Fahrzeug-Fahrerraum befinden und angeordnet sind, um anzuzeigen, wenn Betriebszustände des Motors nicht optimal sind, und mit Speichermitteln zum Aufzeichnen dieser Zustände verbunden ist, wobei der Motor mittels eines Umschaltteils (12) mit einem Sekundärtreibstofftank verbunden werden kann, der mit der Motor-Treibstoffzufuhrleitung verbunden ist, wobei das Verfahren **dadurch gekennzeichnet ist, daß** es als eine Folge der Wirkung auf das Umschaltteil (12) die Erzeugung in dem OBD-System eines elektrischen Signals (V) umfaßt, das ausgestaltet ist, um die Wirkung der Steuereinheit auf die Anzeigemittel (2) und auf die Speichermittel zu deaktivieren.

9. Verfahren nach Anspruch 8, **dadurch gekennzeichnet, daß** das deaktivierende elektrische Signal (V) einen elektrischen Pegel hat, der gleich dem eines elektrischen Signals (M) ist, das in dem System als eine Folge eines Primärtreibstoffzustandes erzeugt wird, der niedriger als ein vorbestimmter Wert ist.

10. Verfahren nach Anspruch 8, **dadurch gekennzeichnet, daß** das deaktivierende elektrische Signal einen elektrischen Pegel hat, der gleich dem eines elektrischen Signals ist, das in dem Moment einer Verwendung einer an dem Fahrzeug vorgesehenen Steckdose erzeugt wird.

11. Verfahren nach Anspruch 8, **dadurch gekennzeichnet, daß** das deaktivierende elektrische Signal einen elektrischen Pegel hat, der gleich dem eines elektrischen Signals ist, das beim Verwenden des Motors bei einer Umgebungstemperatur oder einem Umgebungsdruck erzeugt wird, die bzw. der niedriger als ein vorbestimmter Wert ist.

## Revendications

1. Dispositif pour permettre le fonctionnement correct d'un moteur à combustion interne de véhicule alimenté en carburant principal tel que de l'essence et, alternativement, en carburant secondaire tel que du gaz, et commandé électroniquement par un système OBD par l'intermédiaire d'une unité de commande (1), ladite unité (1) étant connectée à des moyens (3) pour déterminer la quantité de carburant primaire présente dans un réservoir et à des moyens pour détecter les conditions de combustion optimums dans ledit moteur, l'unité étant également connectée à des moyens d'affichage (2) positionnés dans l'habitacle du conducteur du véhicule et agencés pour indiquer quand les conditions de fonctionnement dudit moteur ne sont pas optimums, et à des moyens de mémorisation pour enregistrer ces conditions, le moteur étant capable d'être connecté au moyen d'un élément de basculement (12) à un réservoir de carburant secondaire raccordé au conduit d'alimentation en carburant de moteur, ledit dispositif étant **caractérisé en ce qu'**il comprend des moyens ( 15) pour générer un signal électrique (V) qui désactive la connexion entre l'unité de commande (1) et les moyens d'affichage (2) et les moyens de mémorisation, lesdits moyens de génération (15) étant commandés par l'élément de basculement (12) qui permet aux moyens (15) d'appliquer le signal de désactivation (V) à l'unité de commande (1) au moment où le basculement de l'alimentation du carburant primaire au carburant secondaire a lieu.

2. Dispositif selon la revendication 1, **caractérisé en ce que** l'amplitude du signal électrique de désactivation (V) est égale à celle d'un signal électrique de désactivation (M) présent dans le système OBD.

3. Dispositif selon la revendication 2, **caractérisé en ce que** l'amplitude du signal électrique de désactivation (V) est celle du signal (M) généré par un détecteur de niveau (3) pour le carburant primaire dans le réservoir respectif lorsque ce niveau est inférieur à un niveau prédéterminé.

4. Dispositif selon la revendication 2, **caractérisé en ce que** l'amplitude du signal électrique de désactivation (V) est celle d'un signal correspondant à celui obtenu lors de l'utilisation d'une prise électrique prévue sur le véhicule.

5. Dispositif selon la revendication 2, **caractérisé en ce que** l'amplitude du signal électrique de désactivation (V) est celle d'un signal correspondant à celui obtenu lors de l'utilisation du moteur à une température ou à une pression inférieure à une valeur prédéterminée.

6. Dispositif selon la revendication 2, **caractérisé en ce que** les moyens (15) pour générer le signal électrique de désactivation (V) sont connectés à l'unité de commande (1) d'une manière pouvant être interrompue par un commutateur (11) agencé pour connecter ladite unité (1) auxdits moyens (15) ou, alternativement, à une ligne électrique (10) connectée à un élément commandé ou à des utilisateurs du véhicule.

7. Dispositif selon la revendication 6, **caractérisé en ce que** le commutateur ( 11 ) est agencé pour connecter les moyens de génération (15) ou, alternativement, le détecteur de niveau (3) pour le carburant primaire dans le réservoir respectif.

8. Procédé pour permettre le fonctionnement correct d'un moteur à combustion interne de véhicule alimenté en carburant principal tel que de l'essence et, alternativement, en carburant secondaire tel que du gaz, et commandé électroniquement par un système OBD par l'intermédiaire d'une unité de commande (1), ladite unité (1) étant connectée à des moyens (3) pour déterminer la quantité de carburant primaire présente dans un réservoir et à des moyens pour détecter les conditions de combustion optimums dans ledit moteur, l'unité étant également connectée à des moyens d'affichage (2) positionnés dans l'habitacle du conducteur du véhicule et agencés pour indiquer quand les conditions de fonctionnement dudit moteur ne sont pas optimums, et à des moyens de mémorisation pour enregistrer ces conditions, le moteur étant capable d'être connecté au moyen d'un élément de basculement (12) à un réservoir de carburant secondaire raccordé au conduit d'alimentation en carburant de moteur, ledit procédé étant **caractérisé en ce qu'**il comprend, en conséquence de l'action sur ledit élément de basculement (12), la génération, dans le système OBD, d'un signal électrique (V) agencé pour désactiver l'action de l'unité de commande sur les moyens d'affichage (2) et sur les moyens de mémorisation.

9. Procédé selon la revendication 8, **caractérisé en ce que** l'amplitude du signal électrique de désactivation (V) est égale à celle d'un signal électrique (M) généré dans ledit système en conséquence d'une condition de carburant primaire inférieure à une valeur prédéterminée.

10. Procédé selon la revendication 8, **caractérisé en ce que** l'amplitude du signal électrique de désactivation est égale à celle d'un signal électrique généré au moment de l'utilisation d'une prise électrique prévue sur le véhicule.

11. Procédé selon la revendication 8, **caractérisé en ce que** l'amplitude du signal électrique de désactivation est égale à celle d'un signal électrique généré lors de l'utilisation du moteur à une température ambiante ou à une pression inférieure à une valeur prédéterminée.
